# EUROPEAN PATENT SPECIFICATION

(11) **EP 3 549 017 B1**
(45) Date of publication and mention of the grant of the patent: **02.03.2022**
(21) Application number: 16802073.3
(22) Date of filing: 29.11.2016
(51) Int. Cl.: G06F 9/48

(54) **SCHEDULING OF OPERATIONS FOR ACTOR INSTANCES**
PLANUNG VON OPERATIONEN FÜR AKTEURINSTANZEN
PLANIFICATION D'OPÉRATIONS POUR DES INSTANCES D'ACTEURS

(43) Date of publication of application: 09.10.2019
(73) Proprietor: Telefonaktiebolaget LM Ericsson (PUBL), 164 83 Stockholm (SE)
(72) Inventor: GUSTAFSSON, Harald, 223 63 Lund (SE); SVENSSON, Fredrik, 212 40 Malmö (SE)
(74) Representative: Ericsson
(86) International application number: PCT/EP2016/079126
(87) International publication number: WO 2018/099537

(56) References cited:
- WO-A2-2006/068943
- US-A1- 2005 192 937
- US-A1- 2014 282 582

## Description

### TECHNICAL FIELD

Embodiments presented herein relate to a method, a scheduler, a computer program, and a computer program product for scheduling operation of instances of actors.

### BACKGROUND

In communications networks, there may be a challenge to obtain good performance and capacity for a given communications protocol, its parameters and the physical environment in which the communications network is deployed.

Some network subscriptions could come with a limited amount of resource units to be used for different services in the communications networks. The network subscriber could get a notice when about to reach the limit of used resource units, get limited service or be cut of from service when the limit is reached. Network subscription systems are commonly centrally controlled and/or have only a single entity consuming the amount of resource units, e.g. a cellular phone having its amount of resource units controlled by a charging system of a cellular network operator. Some charging systems enable end-users to have monitor usage of resource units and allow the end-user to set a limit on resource units available for service usage.

A runtime environment can allow application modules, denoted actors, to be deployed distributed over several devices (where each device comprises a runtime environment). In general terms, actors can be regarded as parts of a distributed application that communicate with messages, see http://arxiv.org/abs/1008.1459 (as accessed on 28 November 2016). Actors have conditions to guide placement of an instance of the actor on a runtime environment. Runtime environments have attributes that describe the runtime environment functionality as well as other information.

Deployment of actors on any capable runtime (i.e., the execution environment on a device enables a general use of Internet of Things (IoT); other IoT frameworks might have fixed actions on a specific device. One of the main differences is that an actor instance can be migrated between runtimes.

For example in IoT scenarios, or other scenarios where runtime environments and actors as disclosed above are used, the end-user could utilize many physical devices and may use more services than when using a traditional cellular phone and share a limited amount of resource units to be spread between the runtime environments. In scenarios where runtime environments and actors are used, devices as well as services could disintegrate between network operators. Hence, neither the services nor the utilized devices could be regarded single entities. This could make it difficult to handle the network subscriptions of the utilized devices, even for a single device. <Page 2a>

Hence, there is a need for an improved handling of resource units for services used by runtime environments.

### SUMMARY

An object of embodiments herein is to provide efficient handling of resource units for services used by runtime environments.

According to a first aspect there is presented a method for scheduling operation of instances of actors on a runtime environment during a time period. The method is performed by a scheduler. The method comprises obtaining a total amount of available resource units for each of the instances to use during the time period. The method comprises obtaining an estimated usage of resource units per instance for the time period. The method comprises scheduling operation of the instances during the time period such that the estimated usage of resource units per instance is within each respective total amount of available resource units.

WO 2006/068943 A2 discloses a method comprising receiving a request to schedule a group of one or more application components; obtaining a resource utilization estimate for the group of one or more application components in response to application parameters and profile data; scheduling execution of group of one or more application components periodically according to a dependency graph and based on the resource utilization estimate; and executing one or more application components in a manner that provides soft real-time guarantees at run-time.

Advantageously this provides efficient handling of resource units for services used by the runtime environments.

Advantageously this enables the operation of a particular instance to be matched to the total amount of available resource units for this particular instance.

Advantageously this offers a distributed approach to handle resource units frequently used by many simultaneous instances.

Advantageously this removes the need to communicate with a centrally controlled charging system about permission to access resource units for each individual instance scheduled by the scheduler of the runtime environment.

According to a second aspect there is a scheduler for scheduling operation of instances of actors on a runtime environment during a time period. The scheduler comprises processing circuitry. The processing circuitry is configured to cause the scheduler to obtain a total amount of available resource units for each of the instances to use during the time period. The processing circuitry is configured to cause the scheduler to obtain an estimated usage of resource units per instance for the time period. The processing circuitry is configured to cause the scheduler to schedule operation of the instances during the time period such that the estimated usage of resource units per instance is within each respective total amount of available resource units.

According to a third aspect there is presented a scheduler for scheduling operation of instances of actors on a runtime environment during a time period. The scheduler comprises processing circuitry and a storage medium. The storage medium stores instructions that, when executed by the processing circuitry, cause the scheduler to perform operations, or steps. The operations, or steps, cause the scheduler to obtain a total amount of available resource units for each of the instances to use during the time period. The operations, or steps, cause the scheduler to obtain an estimated usage of resource units per instance for the time period. The operations, or steps, cause the scheduler to schedule operation of the instances during the time period such that the estimated usage of resource units per instance is within each respective total amount of available resource units.

According to a fourth aspect there is presented a scheduler for scheduling operation of instances of actors on a runtime environment during a time period. The scheduler comprises an obtain module configured to obtain a total amount of available resource units for each of the instances to use during the time period. The scheduler comprises an obtain module configured to obtain an estimated usage of resource units per instance for the time period. The scheduler comprises a schedule module configured to schedule operation of the instances during the time period such that the estimated usage of resource units per instance is within each respective total amount of available resource units.

According to a fifth aspect there is presented a computer program for scheduling operation of instances of actors on a runtime environment during a time period, the computer program comprising computer program code which, when run on a scheduler, causes the scheduler to perform a method according to the first aspect.

According to a sixth aspect there is presented a computer program product comprising a computer program according to the fifth aspect and a computer readable storage medium on which the computer program is stored. The computer readable storage medium could be a non-transitory computer readable storage medium.

It is to be noted that any feature of the first, second, third, fourth, fifth and sixth aspects may be applied to any other aspect, wherever appropriate. Likewise, any advantage of the first aspect may equally apply to the second, third, fourth, fifth and/or sixth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communications network according to embodiments;
Figs. 2, 3, 10, 11, 12, and 13 are flowcharts of methods according to embodiments;
Fig. 4 schematically illustrates distribution of operations for an instance of an actor according to an embodiment;
Fig. 5 schematically illustrates distribution of used resource units per operation for the operations in Fig. 4 according to an embodiment;
Figs. 6, 7, 8, and 9 schematically illustrate usage of resource units for an instance during a time period according to embodiments;
Fig. 14 is a schematic diagram showing functional units of a scheduler according to an embodiment;
Fig. 15 is a schematic diagram showing functional modules of a scheduler according to an embodiment; and
Fig. 16 shows one example of a computer program product comprising computer readable storage medium according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

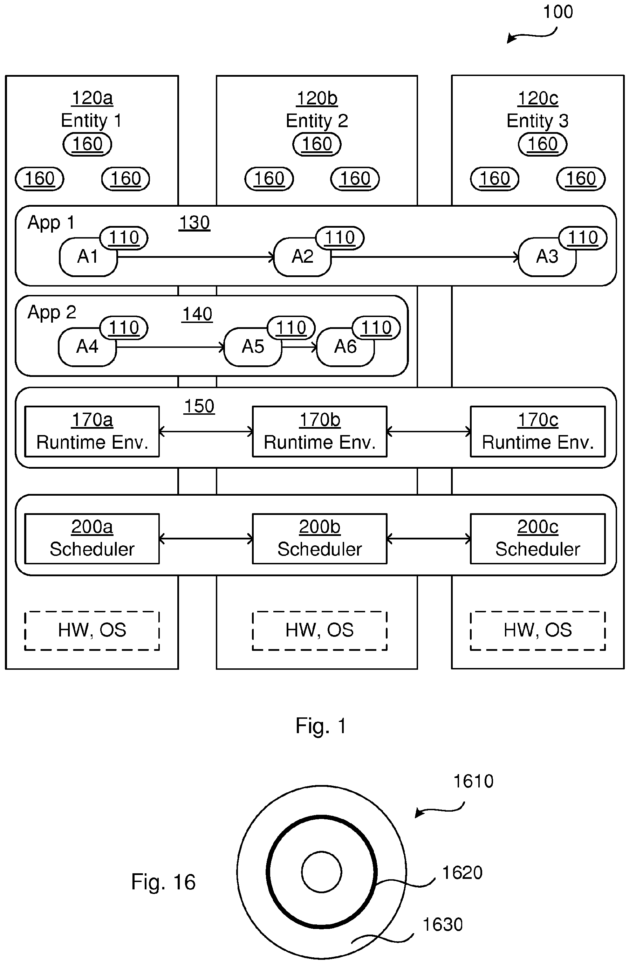

Fig. 1 schematically illustrates a communications network 100. The communications network 100 comprises three entities (Entity 1, Entity 2, Entity 3) 120a, 120b, 120c, representing any combination of devices, compute nodes, and storage nodes. Each entity 120a, 120b, 120c may have its own hardware (HW) and may have its own operating system (OS). Alternatively, hardware and/or operating system is shared among at least two of the entities 120a, 120b, 120c.

The entities 120a, 120b, 120c host a first application (App 1) 130 and a second application (App 2) 140, each of which is distributed among the entities 120a, 120b, 120c. The applications 130, 140 are transparently distributed across the communications network 100 and comprise actors (A1, A2, A3, A4, A5, A6). There is not a one-to-one mapping between actors A1, A2, A3, A4, A5, A6 and entities 120a, 120b, 120c. For example, in the illustrative example of Fig. 1, actors A5 and A6 both reside on the same entity 120b (i.e., Entity 2). The actors (A1, A2, A3, A4, A5, A6) may access a resource object 160 by means of at least one of the runtime environments 170a, 170b, 170c. Accessing the resource object 160 requires the consumption of resource units. Each resource object 160 could be a file system, a sensor, an actuator, a network interface, , or represent software license usage, network operation (such as the transmission and reception of messages), database accessor, other services, etc., for which access is provided to by the runtime environments 170a, 170b, 170c.

The communications network 100 further comprises a distributed execution environment 150 formed by a set of the network of runtime environments 170a, 170b, 170c, seen by the applications 130, 140 as a single platform.

Each actor A1, A2, A3, A4, A5, A6 can be run as one or more instances 110. That is, at least one of the instances 110 can be run by each of the runtime environments 170a, 170b, 170c; the terms "instance of actor" and "actor instance" can be used interchangeably.

Operation of the instances 110 of the actors A1, A2, A3, A4, A5, A6 at the entities 120a, 120b, 120c is scheduled by a respective scheduler 200a, 200b, 200c. In general terms, a scheduler 200a is responsible for scheduling operations of instances 110 for the runtime environment 170a associated with the same entity 120a as the scheduler 200a.

Examples of operations of the instances 110 include, but are not limited to, runtime execution time, actor operation events (such as action firings), software license usage, network operation, and other services. Operations as performed by the instances 110 are assumed to require the usage of resource units.

As disclosed above it could difficult to handle the network services used by runtime environments.

The embodiments disclosed herein therefore relate to mechanisms for scheduling operation of instances 110 of actors A1, A2, A3, A4, A5, A6 on a runtime environment 170a during a time period. In order to obtain such mechanisms there is provided a scheduler 200a, a method performed by the scheduler 200a, a computer program product comprising code, for example in the form of a computer program, that when run on a scheduler 200a, causes the scheduler 200a to perform the method.

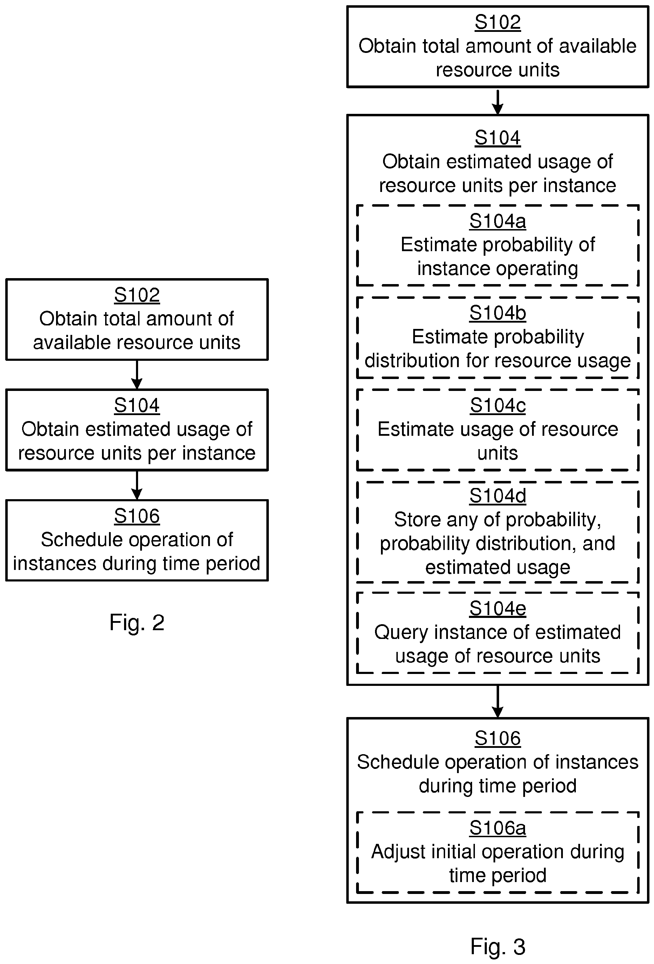

Figs. 2 and 3 are flow charts illustrating embodiments of methods for scheduling operation of instances 110 of actors A1, A2, A3, A4, A5, A6 on a runtime environment 170a during a time period. The methods are performed by the scheduler 200a. The methods are advantageously provided as computer programs 1620.

Reference is now made to Fig. 2 illustrating a method for scheduling operation of instances 110 of actors A1, A2, A3, A4, A5, A6 on a runtime environment 170a during a time period as performed by the scheduler 200a according to an embodiment.

S102: The scheduler 200a obtains a total amount of available resource units for each of the instances 110 to use during the time period.

S104: The scheduler 200a obtains an estimated usage of resource units per instance 110 for the time period.

S106: The scheduler 200a schedules operation of the instances 110 during the time period such that the estimated usage of resource units per instance 110 is within each respective total amount of available resource units.

The scheduler 200a can thereby adjust the probability of operations of the instance 110 (e.g., by performing rate limitation) and control the cost distribution, in terms of resource units for the operation of the instances 110 (e.g., by performing adjustment of runtime aspects or actor instance migration) to limit the spending of resource units by the instance 110 to the set total amount of available resource units.

Embodiments relating to further details of scheduling operation of instances 110 of actors A1, A2, A3, A4, A5, A6 on a runtime environment 170a during a time period as performed by the scheduler 200a will now be disclosed.

As disclosed above, the resource units could by the instances 110 be used for runtime execution time, actor operation events (such as action firings), software license usage, network operation, and other services. Hence, an amount of the resource units could be mapped to a corresponding amount of runtime execution time, operation events, software license usage, network operation, etc.

Reference is now made to Fig. 3 illustrating methods for scheduling operation of instances 110 of actors A1, A2, A3, A4, A5, A6 on a runtime environment 170a during a time period as performed by the scheduler 200a according to further embodiments. It is assumed that steps S102, S104, S106 are performed as described above with reference to Fig. 2 and a thus repeated description thereof is therefore omitted.

There may be different ways for the scheduler 200a to obtain the estimated usage of resource units in step S104. Embodiments relating thereto will now be disclosed.

In some aspects the scheduler 200a determines an occurrence/active period for each actor instance operation (and phase) during the time period, e.g. in the form of a histogram. The scheduler 200a could detect which phase an actor instance is in (when it has several) by observing its operation, tasks/data in operation queues or by requesting the information from the actor instance. If, for example, the actor instance operates in different phases, the scheduler 200a could select a runtime/quality/periodicity requiring a lower amount of resource units to be used during passive phases (such as during monitoring) and select a runtime/quality/periodicity requiring a higher amount of resource units to be used during active phases. Hence, according to an embodiment the scheduler 200a is configured to perform step S104a, per instance 110, as part of step S104:
S104a: The scheduler 200a estimates probability of operation of the instance 110 operating in active mode during at least part of the time period.

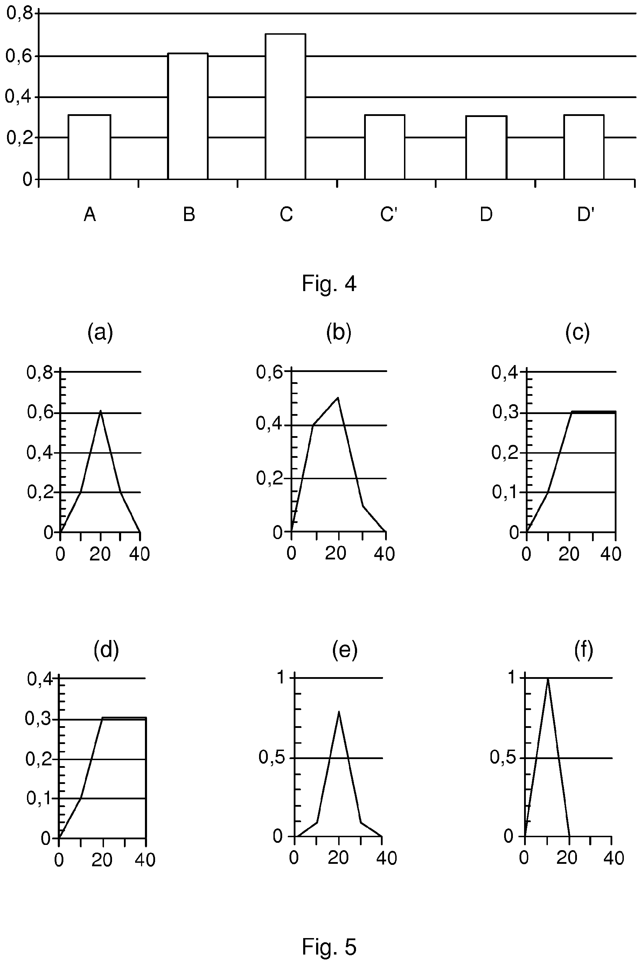

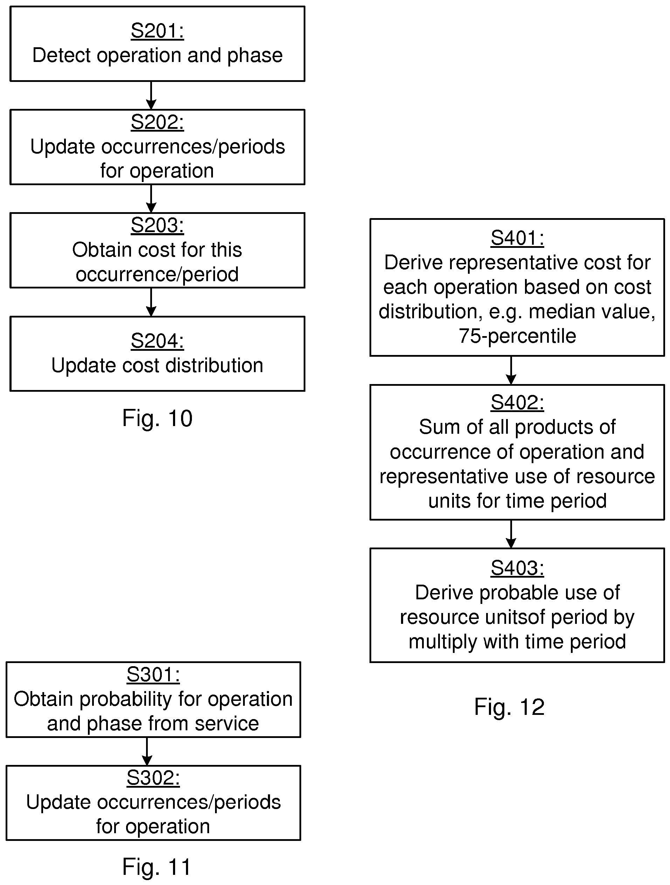

This is illustrated in Fig. 4 and will be further disclosed below with reference to the flowcharts of Figs. 10 (first two steps) and 11. Fig. 4 schematically illustrates distribution of operations A, B, C, C', D, and D' for an instance 110 of an actor A1, A2, A3, A4, A5, A6 according to an embodiment. Operations C' (rate limit) and D' (quality limit) are adjusted versions of operations C and D, respectively.

In some aspects the scheduler 200a further determines a distribution of cost for such operation. Hence, according to an embodiment the scheduler 200a is configured to perform step S104b, per instance 110, as part of step S104:
S104b: The scheduler 200a estimates probability distribution for resource unit usage for the operation of the instance 110 during the time period.

This is illustrated in Fig. 5 and will be further disclosed below with reference to the flowchart of Fig. 10 (last two steps). Fig. 5 schematically illustrates distribution of used resource units per operation for the operations in Fig. 4 according to an embodiment, where the distribution in (a) corresponds to operation A, the distribution in (b) corresponds to operation B, the distribution in (c) corresponds to operation C, the distribution in (d) corresponds to operation C', the distribution in (e) corresponds to operation D, and the distribution in (f) corresponds to operation D'.

In some aspects the scheduler 200a further determines a total probable cost derived from such probability and distribution. Hence, according to an embodiment the scheduler 200a is configured to perform step S104c, per instance 110, as part of step S104:
S104c: The scheduler 200a estimates usage of resource units for the instance 110 during the time period from the estimated probability of operation (as estimated in step S104a) and the estimated probability distribution (as estimated in step S104b).

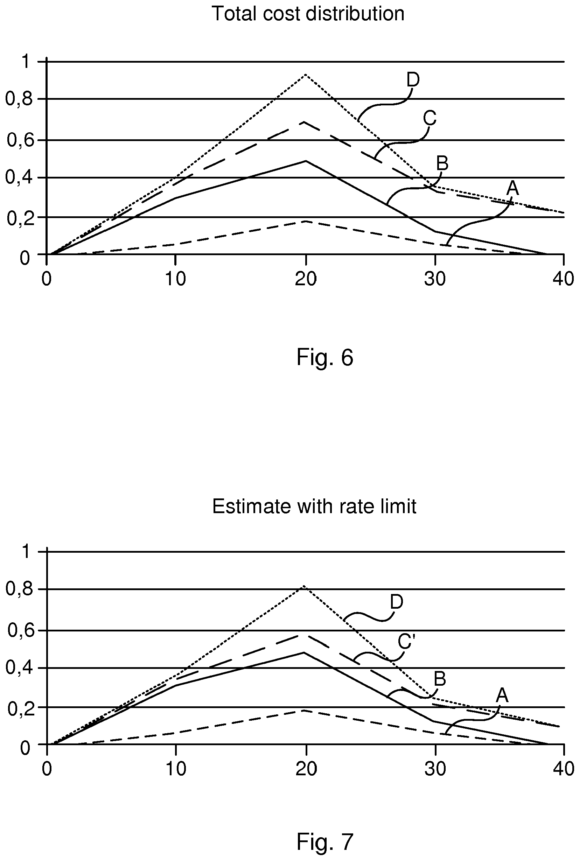

This is illustrated in Figs. 6, 7, 8, and 9 and will be further disclosed below with reference to the flowchart of Fig. 12.

The scheduler 200a could cache results of previous calculations as performed in any of steps S104a, S104b, S104c in order to avoid recalculating every result when evaluating e.g. different rate limitations or dynamically updated probabilities. The estimated probability, the estimated probability distribution, and/or the estimated usage of resource units could thus be stored by the scheduler 200a in order to, for example, avoid recalculations. Hence, according to an embodiment the scheduler 200a is configured to perform step S104d as part of step S104:
S104d: The scheduler 200a stores at least one of the estimated probability of operation, the estimated probability distribution, and the estimated usage of resource units for the instance 110.

The scheduler 200a can thereby dynamically build up information about costs, in terms of resource unit usage, for actor instance operations based on historic events.

According to an embodiment the scheduler 200a obtains the estimated usage of resource units for the time period directly from the instance 110. Hence, according to an embodiment the scheduler 200a is configured to perform step S104e, per instance 110, as part of step S104:
S104e: The scheduler 200a queries the instance 110 of its estimated usage of resource units for the time period. The estimated usage of resource units for that instance 110 is obtained from that instance 110 in response thereto (by the instance 110 responding to the query and by the scheduler 200a receiving such a response from the instance 110).

If step S104e is performed then at least some of steps S104a, S104b, and S104c may be skipped.

There may be different ways for the scheduler 200a to schedule operation of the instance 110 in step S106. Embodiments relating thereto will now be disclosed.

According to some aspects the scheduler 200a adjusts operation of the instance 110, for example to limit usage of resource units for the instance 110 to the set total amount of available resource units for that instance 110. Hence, according to an embodiment the estimated usage of resource units per instance 110 is associated with an operation (i.e., at least one operation) per instance 110 during the time period, and the scheduler 200a is configured to perform step S106a as part of step S106 in order to schedule the operation:
S106a: The scheduler 200a adjusts the operation of at least one of the instances 110 during the time period.

An actor instance may perform several different types of operations during the time period. It could therefore be the mix of these that are adjusted in step S106a.

As a reference, Fig. 6 schematically illustrates distribution of resource units for the instance 110 during a time period according to an embodiment without any adjustment of operation (i.e., without step S106a being performed).

There may be different examples of adjustments of operation to be performed in step S106a.

According to some aspects the adjustment of operation relates to the instance 110 to use less resource units than given by the probable cost for the time period. Hence, according to an embodiment the adjusting in step S106a comprises adjusting the operation of at least one of the instances 110 to use less than the estimated usage of resource units per instance 110 during the time period.

According to some aspects the adjustment of operation relates to the instance 110 to limit the rate of the actor instance operation. Hence, according to an embodiment the operation is associated with frequency of occurrence during which the instance 110 is in active mode, and wherein the operation is adjusted such that the frequency of occurrence is lowered (i.e., such that the operation is performed less frequently). Hence, action firings of the instance 110 could thereby be distributed in number and interval to last the time period. Fig. 7 schematically illustrates usage of resource units for the instance 110 during a time period according to an embodiment where the operation is adjusted such that the frequency of occurrence is lowered for operation C to C' (compared to in Fig. 6).

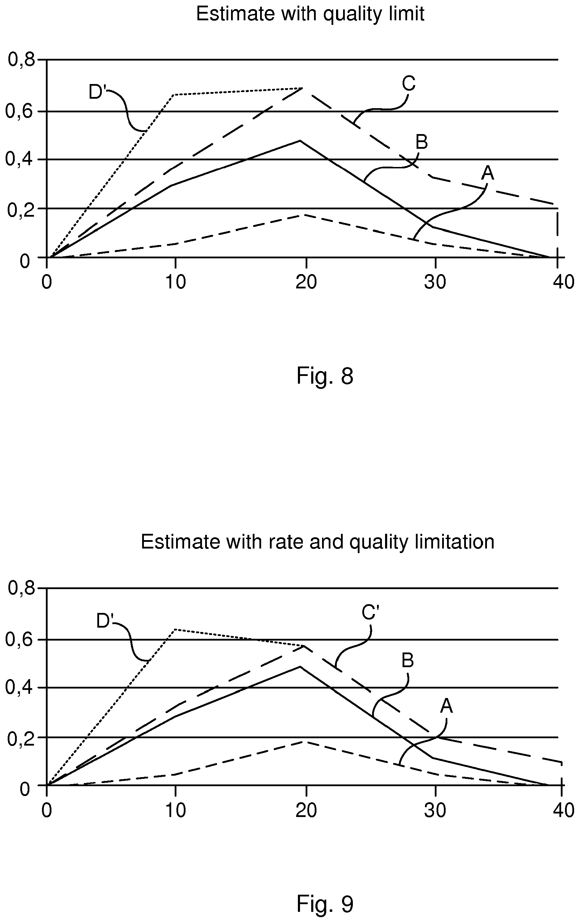

According to some aspects the adjustment of operation relates to control of runtime aspects. Hence, according to an embodiment the operation is associated with a quality of service level, and the operation is adjusted or replaced such that the quality of service level is lowered (e.g. to match the total amount of available resource units). Fig. 8 schematically illustrates usage of resource units for the instance 110 during a time period according to an embodiment where the quality of service level is lowered for operation D to D' (compared to in Fig. 6). Fig. 9 schematically illustrates usage of resource units for the instance 110 during a time period according to an embodiment where the operation is adjusted such that the frequency of occurrence is lowered for operation C' compared to C and the quality of service level is lowered for operation D to D' (i.e., a combination of the embodiments in Figs. 7 and 8).

According to some aspects the adjustment of operation relates to the instance 110 to replace the operation with another operation. Hence, according to an embodiment the operation is associated with a quality of service level, and wherein the operation is replaced with another operation.

According to some aspects the adjustment of operation relates to actor instance migration. Particularly, according to an embodiment the operation is adjusted by at least one of the actor instances 110 being migrated for operation on another runtime environment 170b, 170c during the time period.

There could be different ways to select the so-called another runtime environment 170b, 170c.

According to some aspects the actor instance is migrated to a runtime environment 170b, 170c with lower service cost. Hence, according to an embodiment the so-called another runtime environment 170b, 170c is associated with lower usage of resource units for the time period than the runtime environment 170a.

According to some aspects the actor instance is migrated to a runtime environment 170b, 170c with higher service cost. Hence, according to an embodiment the so-called another runtime environment 170b, 170c is associated with higher usage of resource units for the time period than the runtime environment 170a.

There may be different ways for the scheduler 200a to determine what kind of adjustment of operation to perform in step S106a.

According to an embodiment the estimated usage of resource units per instance 110 for the time period is higher than the total amount of available resource units. The scheduler 200b could then adjust the actor instance operation and runtime aspects until estimated usage of resource units per instance 110 is below the total amount of available resource units. Additionally or alternatively the scheduler 200a will (at least try to) migrate the actor instance to a runtime with information stating lower the use of the resource units.

According to an embodiment the estimated usage of resource units per instance 110 for the time period is lower than the total amount of available resource units and lower than a resource unit usage threshold. The scheduler 200a could then (at least try to) migrate the instance 110 to a runtime environment 200b, 200c with information stating higher use of the resource units.

The scheduler 200a could repeat performing steps S102-S106 to dynamically control the spending of the allowance, e.g. on regular time intervals or when obtaining indications that the estimated usage of resource units of the instance 110 has changed.

One particular embodiment for obtaining estimated usage of resource units as in step S104 will now be disclosed with reference to the flowchart of Fig. 10.

S201: The scheduler 200a detects operation and phase (if available) for the instance 110.

S202: The scheduler 200a adjusts operation of the instance 110 during the time period such that the instance 110 uses less resource units than given by the probable cost for the time period.

S203: The scheduler 200a obtains an estimate of the amount or resource units needed for performing the operation as adjusted in step S202.

S204: The scheduler 200a updates the estimated probability distribution for resource unit usage for the adjusted operation of the instance 110 during the time period.

Another particular embodiment for obtaining estimated usage of resource units as in step S104 will now be disclosed with reference to the flowchart of Fig. 11.

S301: The scheduler 200a obtains operation and phase (if available) of a service used by the instance 110.

S302: The scheduler 200a adjusts operation of the instance 110 during the time period such that the instance 110 uses less resource units than given by the probable use of resource units for the time period.

One particular embodiment for estimating usage of resource units for the instance 110 during the time period as in step S104c will now be disclosed with reference to the flowchart of Fig. 12.

S401: The scheduler 200a estimates the usage of resource units for each operation of the instance 110 based on the distribution of the operations (e.g. median value, 75th percentile (third quartile), etc.)

S402: The scheduler 200a sums all products of occurrence of operation and the estimated usage of resource units for the time period.

S403: The scheduler 200a estimates the usage of resource units for the instance 110 during the time period by multiplying the sum obtained in step S402 with the value of the time period.

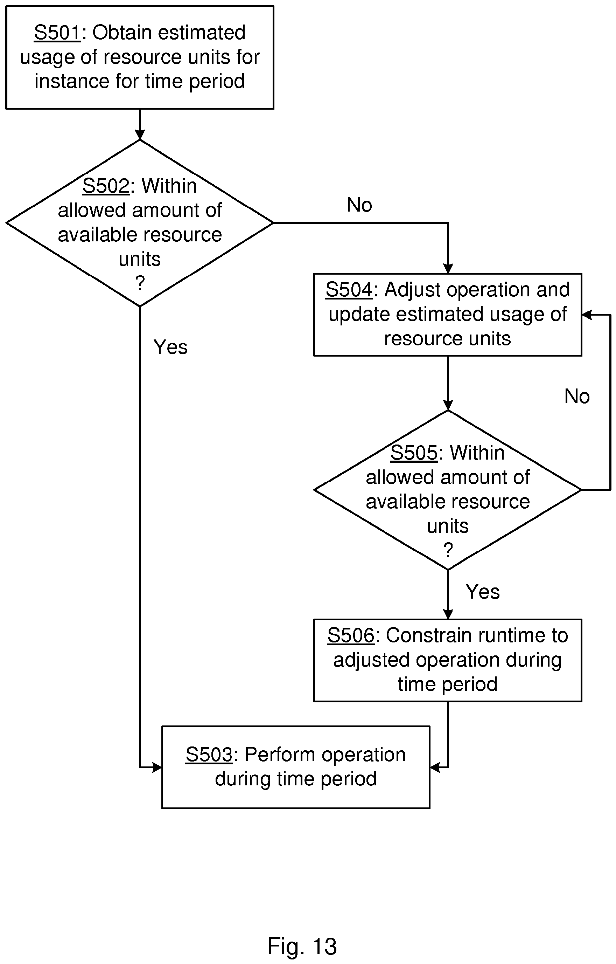

One particular embodiment for scheduling operation of one of the instances 110 during a time period will now be disclosed with reference to the flowchart of Fig. 13.

S501: The scheduler 200a obtains an estimated usage of resource units for the instance 110 for the time period.

Operation of the instance 110 is now scheduled during the time period such that the estimated usage of resource units for the instance 110 is within the total amount of available resource units for the instance 110 and thus depends on the outcome of step S502:
S502: The scheduler 200a checks whether the estimated usage of resource units is within the total amount of available resource units for the instance 110 for the time period. If yes, step S503 is entered, and if no, step S504 is entered.
S503: The scheduler 200a performs the operation of the instance 110 during the time period.
S504: The scheduler 200a adjusts operation of the instance 110 during the time period and updates the estimated usage of resource units for the instance 110 for the time period to correspond to the adjusted operation.
S505: The scheduler 200a checks whether the updated estimated usage of resource units is within the total amount of available resource units for the instance 110 for the time period. If yes, step S506 is entered, and if no, step S504 is entered again.
S506: The scheduler 200a constrains the runtime environment on which the instance 110 is to be run (or the instance 110 itself) during the time period to the adjusted operation.

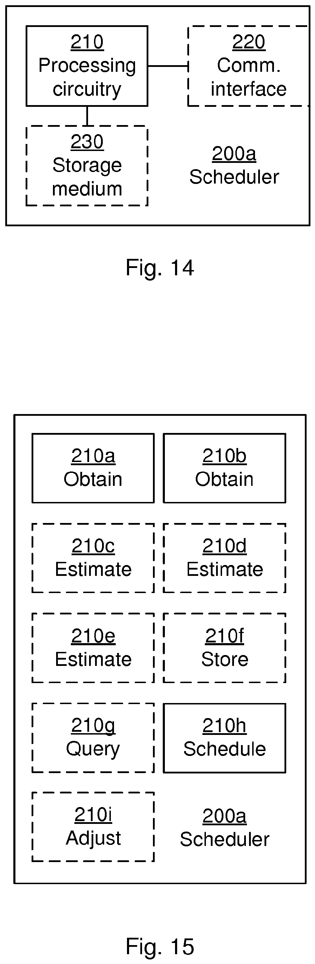

Fig. 14 schematically illustrates, in terms of a number of functional units, the components of a scheduler 200a according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1610 (as in Fig. 16), e.g. in the form of a storage medium 230. The processing circuitry 210 may further be provided as at least one application specific integrated circuit (ASIC), or field programmable gate array (FPGA).

Particularly, the processing circuitry 210 is configured to cause the scheduler 200a to perform a set of operations, or steps, S102-S106a, S201-S204, S301-S302, S401-S403, S501-S506, as disclosed above. For example, the storage medium 230 may store the set of operations, and the processing circuitry 210 may be configured to retrieve the set of operations from the storage medium 230 to cause the scheduler 200a to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The scheduler 200a may further comprise a communications interface 220 at least configured for communications with other entities and devices in the communications network 100. As such the communications interface 220 may comprise one or more transmitters and receivers, comprising analogue and digital components. The processing circuitry 210 controls the general operation of the scheduler 200a e.g. by sending data and control signals to the communications interface 220 and the storage medium 230, by receiving data and reports from the communications interface 220, and by retrieving data and instructions from the storage medium 230. Other components, as well as the related functionality, of the scheduler 200a are omitted in order not to obscure the concepts presented herein.

Fig. 15 schematically illustrates, in terms of a number of functional modules, the components of a scheduler 200a according to an embodiment. The scheduler 200a of Fig. 15 comprises a number of functional modules; an obtain module 210a configured to perform step S102, an obtain module 210b configured to perform step S104, and a schedule module 210h configured to perform step S106. The scheduler 200a of Fig. 15 may further comprise a number of optional functional modules, such as any of an estimate module 210c configured to perform step S104a, an estimate module 210d configured to perform step S104b, an estimate module 210e configured to perform step S104c, a store module 210f configured to perform step S104d, a query module 210g configured to perform step S104e, and an adjust module 210i configured to perform step S106a.

In general terms, each functional module 210a-210i may in one embodiment be implemented only in hardware and in another embodiment with the help of software, i.e., the latter embodiment having computer program instructions stored on the storage medium 230 which when run on the processing circuitry makes the scheduler 200a perform the corresponding steps mentioned above in conjunction with Fig 15. It should also be mentioned that even though the modules correspond to parts of a computer program, they do not need to be separate modules therein, but the way in which they are implemented in software is dependent on the programming language used. Preferably, one or more or all functional modules 210a-210i may be implemented by the processing circuitry 210, possibly in cooperation with the communications interface 220 and/or the storage medium 230. The processing circuitry 210 may thus be configured to from the storage medium 230 fetch instructions as provided by a functional module 210a-210i and to execute these instructions, thereby performing any steps as disclosed herein.

The scheduler 200a may be provided as a standalone device or as a part of at least one further device in the communications network 100. As with reference to Fig. 15, the scheduler 200a could comprise different subsystems/modules that separately handle different functions of the scheduler 200a as herein disclosed. For example, a first portion of the instructions performed by the scheduler 200a may be executed in a first device, and a second portion of the of the instructions performed by the scheduler 200a may be executed in a second device; the herein disclosed embodiments are not limited to any particular number of devices on which the instructions performed by the scheduler 200a may be executed. Hence, the methods according to the herein disclosed embodiments are suitable to be performed by a scheduler 200a residing in a cloud computational environment. Therefore, although a single processing circuitry 210 is illustrated in Fig. 14 the processing circuitry 210 may be distributed among a plurality of devices, or nodes. The same applies to the functional modules 210a-210i of Fig. 15 and the computer program 1620 of Fig. 16 (see below).

Fig. 16 shows one example of a computer program product 1610 comprising computer readable storage medium 1630. On this computer readable storage medium 1630, a computer program 1620 can be stored, which computer program 1620 can cause the processing circuitry 210 and thereto operatively coupled entities and devices, such as the communications interface 220 and the storage medium 230, to execute methods according to embodiments described herein. The computer program 1620 and/or computer program product 1610 may thus provide means for performing any steps as herein disclosed.

In the example of Fig. 16, the computer program product 1610 is illustrated as an optical disc, such as a CD (compact disc) or a DVD (digital versatile disc) or a Blu-Ray disc. The computer program product 1610 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1620 is here schematically shown as a track on the depicted optical disk, the computer program 1620 can be stored in any way which is suitable for the computer program product 1610.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for scheduling operation of instances (110) of actors (A1, A2, A3, A4, A5, A6) on a runtime environment (170a) during a time period, the method being performed by a scheduler (200a), the method comprising:
obtaining (S102) a total amount of available resource units for each of the instances (110) to use during the time period;
obtaining (S104) an estimated usage of resource units per instance (110) for the time period; and
scheduling (S106) operation of the instances (110) during the time period such that the estimated usage of resource units per instance (110) is within each respective total amount of available resource units.

2. The method according to claim 1, wherein the estimated usage of resource units per instance (110) is associated with an operation per instance (110) during the time period, and wherein scheduling operation comprises:
adjusting (S106a) the operation of at least one of the instances (110) during the time period.

3. The method according to claim 2, wherein said adjusting comprises adjusting the operation of at least one of the instances (110) to use less than the estimated usage of resource units per instance (110) during the time period.

4. The method according to claim 3, wherein the operation is associated with frequency of occurrence during which the instance (110) is in active mode, and wherein the operation is adjusted such that the frequency of occurrence is lowered.

5. The method according to claim 3, wherein the operation is associated with a quality of service level, and wherein the operation is adjusted such that the quality of service level is lowered.

6. The method according to claim 3, wherein the operation is associated with a quality of service level, and wherein the operation is replaced with another operation.

7. The method according to claim 3, wherein the operation is adjusted by at least one of the actor instances (110) being migrated for operation on another runtime environment (170b, 170c) during the time period.

8. The method according to claim 7, wherein said another runtime environment (170b, 170c) is associated with lower usage of resource units for the time period than the runtime environment (170a).

9. The method according to claim 7, wherein said another runtime environment (170b, 170c) is associated with higher usage of resource units for the time period than the runtime environment (170a).

10. The method according to any of the preceding claims, wherein the estimated usage of resource units per instance (110) for the time period is higher than the total amount of available resource units.

11. The method according to any of the preceding claims, wherein the estimated usage of resource units per instance (110) for the time period is lower than the total amount of available resource units and lower than a resource unit usage threshold.

12. The method according to any of the preceding claims, wherein obtaining the estimated usage of resource units comprises, per instance (110):
estimating (S104a) probability of operation of the instance (110) operating in active mode during at least part of the time period;
estimating (S104b) probability distribution for resource unit usage for the operation of the instance (110) during the time period; and
estimating (S104c) usage of resource units for the instance (110) during the time period from the estimated probability of operation and the estimated probability distribution.

13. The method according to claim 12, further comprising:
storing (S104d) at least one of the estimated probability of operation, the estimated probability distribution, and the estimated usage of resource units for the instance (110).

14. The method according to any of the preceding claims, wherein obtaining the estimated usage of resource units comprises, per instance (110):
querying (S104e) the instance (110) of its estimated usage of resource units for the time period, and wherein the estimated usage of resource units for that instance (110) is obtained from that instance (110) in response thereto.

15. A scheduler (200a) for scheduling operation of instances (110) of actors (A1, A2, A3, A4, A5, A6) on a runtime environment (170a) during a time period, the scheduler (200a) comprising processing circuitry (210), the processing circuitry being configured to cause the scheduler (200a) to perform a method according to any of the preceding claims.

16. A computer program (1620) for scheduling operation of instances (110) of actors (A1, A2, A3, A4, A5, A6) on a runtime environment (170a) during a time period, the computer program comprising computer code which, when run on processing circuitry (210) of a scheduler (200a), causes the scheduler (200a) to perform a method according to any of claims 1 to 14.

## Patentansprüche

1. Verfahren zum Terminieren eines Betriebs von Instanzen (110) von Akteuren (A1, A2, A3, A4, A5, A6) auf einer Laufzeitumgebung (170a) während eines Zeitraums, wobei das Verfahren durch einen Scheduler (200a) ausgeführt wird, wobei das Verfahren umfasst:
Erhalten (S102) einer Gesamtmenge von verfügbaren Ressourceneinheiten für jede der während des Zeitraums zu verwendenden Instanzen (110);
Erhalten (S104) einer geschätzten Nutzung von Ressourceneinheiten pro Instanz (110) für den Zeitraum; und
Terminieren (S106) eines Betriebs der Instanzen (110) während des Zeitraumes derart, dass die geschätzte Nutzung von Ressourceneinheiten pro Instanz (110) innerhalb jeder der jeweiligen Gesamtmenge von verfügbaren Ressourceneinheiten ist.

2. Verfahren nach Anspruch 1, wobei die geschätzte Nutzung von Ressourceneinheiten pro Instanz (110) mit einem Betrieb pro Instanz (110) verbunden ist während des Zeitraums, und wobei ein Terminieren eines Betriebs umfasst:
Justieren (S106a) eines Betriebs von wenigstens einer der Instanzen (110) während des Zeitraums.

3. Verfahren nach Anspruch 2, wobei das Justieren ein Justieren des Betriebs von wenigstens einer der Instanzen (110) umfasst, um weniger als die geschätzte Nutzung von Ressourceneinheiten pro Instanz (110) zu nutzen während des Zeitraums.

4. Verfahren nach Anspruch 3, wobei der Betrieb mit einer Frequenz eines Auftretens verbunden ist, während welchem die Instanz (110) in einem aktiven Modus ist, und wobei der Betrieb derart justiert wird, dass die Frequenz eines Auftretens abgesenkt wird.

5. Verfahren nach Anspruch 3, wobei der Betrieb mit einer Qualität eines Servicelevels verbunden ist, und wobei der Betrieb derart justiert wird, dass die Qualität eines Servicelevels abgesenkt wird.

6. Verfahren nach Anspruch 3, wobei der Betrieb mit einer Qualität eines Servicelevels verbunden ist, und wobei der Betrieb mit einem anderen Betrieb ersetzt wird.

7. Verfahren nach Anspruch 3, wobei der Betrieb justiert wird durch wenigstens eine der Akteur-Instanzen (110), die für den Betrieb auf eine andere Laufzeitumgebung (170b, 170c) migriert wird während des Zeitraums.

8. Verfahren nach Anspruch 7, wobei die andere Laufzeitumgebung (170b, 170c) mit einer geringeren Nutzung von Ressourceneinheiten verbunden ist für den Zeitraum als die Laufzeitumgebung (170a).

9. Verfahren nach Anspruch 7, wobei die andere Laufzeitumgebung (170b, 170c) mit einer höheren Nutzung von Ressourceneinheiten verbunden ist für den Zeitraum als die Laufzeitumgebung (170a).

10. Verfahren nach einem der vorstehenden Ansprüche, wobei die geschätzte Nutzung von Ressourceneinheiten pro Instanz (110) für den Zeitraum höher ist als die Gesamtmenge von verfügbaren Ressourceneinheiten.

11. Verfahren nach einem der vorstehenden Ansprüche, wobei die geschätzte Nutzung von Ressourceneinheiten pro Instanz (110) für den Zeitraum niedriger ist als die Gesamtmenge von verfügbaren Ressourceneinheiten und niedriger als eine Ressourceneinheit-Nutzungsschwelle.

12. Verfahren nach einem der vorstehenden Ansprüche, wobei ein Erhalten der geschätzten Nutzung von Ressourceneinheiten umfasst, pro Instanz (110):
Schätzen (S104a) einer Wahrscheinlichkeit eines Betriebs der wenigstens einen Teil des Zeitraums in einem aktiven Modus arbeitenden Instanz (110);
Schätzen (S104b) einer Wahrscheinlichkeitsverteilung für eine Ressourceneinheit-Nutzung für den Betrieb der Instanz (110) während des Zeitraums; und
Schätzen (S104c) einer Nutzung von Ressourceneinheiten für die Instanz (110) während des Zeitraums für die geschätzte Wahrscheinlichkeit eines Betriebs und die geschätzte Wahrscheinlichkeitsverteilung.

13. Verfahren nach Anspruch 12, weiter umfassend:
Speichern (S104d) wenigstens einer der geschätzten Wahrscheinlichkeit eines Betriebs, der geschätzten Wahrscheinlichkeitsverteilung, und der geschätzten Nutzung von Ressourceneinheiten für die Instanz (110).

14. Verfahren nach einem der vorstehenden Ansprüche, wobei ein Erhalten der geschätzten Nutzung von Ressourceneinheiten umfasst, pro Instanz (110):
Abfragen (S104e) der Instanz (110) nach ihrer geschätzten Nutzung von Ressourceneinheiten für den Zeitraum, und wobei die geschätzte Nutzung von Ressourceneinheiten für diese Instanz (110) von dieser Instanz (110) als Antwort darauf erhalten wird.

15. Scheduler (200a) zum Terminieren eines Betriebs von Instanzen (110) von Akteuren (A1, A2, A3, A4, A5, A6) auf einer Laufzeitumgebung (170a) während eines Zeitraums, wobei der Scheduler (200a) eine Verarbeitungsschaltung (210) umfasst, wobei die Verarbeitungsschaltung dazu konfiguriert ist, den Scheduler (200a) zu veranlassen, ein Verfahren nach einem der vorstehenden Ansprüche auszuführen.

16. Computerprogramm (1620) zum Terminieren eines Betriebs von Instanzen (110) von Akteuren (A1, A2, A3, A4, A5, A6) auf einer Laufzeitumgebung (170a) während eines Zeitraums, wobei das Computerprogramm Computer-Codemittel umfasst, welche wenn sie auf einer Verarbeitungsschaltung (210) eines Schedulers (200a) ausgeführt werden, den Scheduler (200a) veranlassen, ein Verfahren nach einem der Ansprüche 1 bis 14 auszuführen.

## Revendications

1. Procédé de planification d'opération d'instances (110) d'acteurs (A1, A2, A3, A4, A5, A6) dans un environnement d'exécution (170a) pendant une période, le procédé étant réalisé par un planificateur (200a), le procédé comprenant :
l'obtention (S102) d'une quantité totale d'unités de ressource disponibles pour chacune des instances (110) à utiliser pendant la période ;
l'obtention (S104) d'un usage estimé d'unités de ressource par instance (110) pour la période ; et
la planification (S106) d'une opération des instances (110) pendant la période de telle sorte que l'usage estimé d'unités de ressource par instance (110) s'inscrit dans chaque quantité totale respective d'unités de ressource disponibles.

2. Procédé selon la revendication 1, dans lequel l'usage estimé d'unités de ressource par instance (110) est associé à une opération par instance (110) pendant la période, et dans lequel l'opération de planification comprend :
l'ajustement (S106a) de l'opération d'au moins une des instances (110) pendant la période.

3. Procédé selon la revendication 2, dans lequel ledit ajustement comprend l'ajustement de l'opération d'au moins une des instances (110) pour utiliser moins que l'usage estimé d'unités de ressource par instance (110) pendant la période.

4. Procédé selon la revendication 3, dans lequel l'opération est associée à une fréquence d'occurrence pendant laquelle l'instance (110) est en mode actif, et dans lequel l'opération est ajustée de telle sorte que la fréquence d'occurrence est réduite.

5. Procédé selon la revendication 3, dans lequel l'opération est associée à un niveau de qualité de service, et dans lequel l'opération est ajustée de telle sorte que le niveau de qualité de service est réduit.

6. Procédé selon la revendication 3, dans lequel l'opération est associée à un niveau de qualité de service, et dans lequel l'opération est remplacée par une autre opération.

7. Procédé selon la revendication 3, dans lequel l'opération est ajustée par une migration d'au moins une des instances d'acteurs (110) pour une opération dans un autre environnement d'exécution (170b, 170c) pendant la période.

8. Procédé selon la revendication 7, dans lequel ledit autre environnement d'exécution (170b, 170c) est associé à un usage d'unités de ressource pour la période inférieur à celui de l'environnement d'exécution (170a).

9. Procédé selon la revendication 7, dans lequel ledit autre environnement d'exécution (170b, 170c) est associé à un usage d'unités de ressource pour la période supérieur à celui de l'environnement d'exécution (170a).

10. Procédé selon l'une quelconque des revendications précédentes, dans lequel l'usage estimé d'unités de ressource par instance (110) pour la période est supérieur à la quantité totale d'unités de ressource disponibles.

11. Procédé selon l'une quelconque des revendications précédentes, dans lequel l'usage estimé d'unités de ressource par instance (110) pour la période est inférieur à la quantité totale d'unités de ressource disponibles et inférieur à un seuil d'usage d'unités de ressource.

12. Procédé selon l'une quelconque des revendications précédentes, dans lequel l'obtention de l'usage estimé d'unités de ressource comprend, par instance (110) :
l'estimation (S104a) d'une probabilité d'opération de l'instance (110) fonctionnant en mode actif pendant au moins une partie de la période ;
l'estimation (S104b) d'une distribution de probabilité pour un usage d'unités de ressource pour l'opération de l'instance (110) pendant la période ; et
l'estimation (S104c) d'un usage d'unités de ressource pour l'instance (110) pendant la période à partir de la probabilité estimée d'opération et de la distribution de probabilité estimée.

13. Procédé selon la revendication 12, comprenant en outre :
le stockage (S104d) d'au moins une de la probabilité d'opération estimée, de la distribution de probabilité estimée et de l'usage estimé d'unités de ressource pour l'instance (110).

14. Procédé selon l'une quelconque des revendications précédentes, dans lequel l'obtention de l'usage estimé d'unités de ressource comprend, par instance (110) :
la demande (S104e) à l'instance (110) de son usage estimé d'unités de ressource pour la période, et dans lequel l'usage estimé d'unités de ressource pour cette instance (110) est obtenu à partir de cette instance (110) en réponse à celle-ci.

15. Planificateur (200a) destiné à planifier une opération d'instances (110) d'acteurs (A1, A2, A3, A4, A5, A6) dans un environnement d'exécution (170a) pendant une période, le planificateur (200a) comprenant un ensemble de circuits de traitement (210), l'ensemble de circuits de traitement étant configuré pour amener le planificateur (200a) à effectuer un procédé selon l'une quelconque des revendications précédentes.

16. Programme informatique (1620) destiné à planifier une opération d'instances (110) d'acteurs (A1, A2, A3, A4, A5, A6) dans un environnement d'exécution (170a) pendant une période, le programme informatique comprenant un codage informatique qui, lorsqu'il est exécuté sur un ensemble de circuits de traitement (210) d'un planificateur (200a), amène le planificateur (200a) à effectuer un procédé selon l'une quelconque des revendications 1 à 14.
